# EUROPEAN PATENT APPLICATION

(11) **EP 4 556 100 A1**
(43) Date of publication of application: **21.05.2025**
(21) Application number: 23839658.4
(22) Date of filing: 12.07.2023
(51) Int. Cl.: B01D 53/08, B01D 53/62

(54) **CARBON DIOXIDE RECOVERY DEVICE**

(30) Priority: 15.07.2022 WO PCT/JP2022/027821
(71) Applicant: MITSUBISHI ELECTRIC CORPORATION, Chiyoda-ku Tokyo 100-8310 (JP)
(72) Inventor: TANISHIMA, Makoto, Tokyo 100-8310 (JP); INOUE, Takumi, Tokyo 100-8310 (JP); FUKUI, Tomoya, Tokyo 100-8310 (JP); FUJINO, Jun, Tokyo 100-8310 (JP); ONAKA, Yoji, Tokyo 100-8310 (JP); SHINOKI, Toshio, Tokyo 100-8310 (JP); KAWAMOTO, Makoto, Tokyo 100-8310 (JP)
(74) Representative: Meissner Bolte Partnerschaft mbB
(86) International application number: PCT/JP2023/025755
(87) International publication number: WO 2024/014486

(57) **Abstract**

A carbon dioxide capturing apparatus includes an adsorber (30), a jig (20), and a rail (10). The adsorber is disposed on the jig. The jig is rotatably disposed on the rail, and is moved downward together with the adsorber by the rail.

## Description

### TECHNICAL FIELD

The present disclosure relates to a carbon dioxide capturing apparatus.

### BACKGROUND ART

For example, Japanese National Patent Publication No. 2014-516785 (PTL 1) describes a carbon dioxide capturing apparatus. The carbon dioxide capturing apparatus described in PTL 1 includes a cylindrical adsorber section extending along an upward and downward direction. Gas containing carbon dioxide enters the adsorber section from the lower end side and flows upward. Beads capable of adsorbing carbon dioxide are fed from the upper end side of the adsorber section, and the beads move to the lower end side of the adsorber section. Thus, the gas with a reduced carbon dioxide concentration is discharged from the upper end side of the cylindrical section.

### CITATION LIST

### PATENT LITERATURE

PTL 1: Japanese National Patent Publication No. 2014-516785

### SUMMARY OF INVENTION

### TECHNICAL PROBLEM

In the carbon dioxide capturing apparatus described in PTL 1, the gas containing carbon dioxide impinges on the beads from only one direction. Therefore, the carbon dioxide capturing apparatus described in PTL 1 has room for improvement in efficiency of capturing carbon dioxide.

The present disclosure has been made in view of the problem of conventional techniques as described above. More specifically, the present disclosure provides a carbon dioxide capturing apparatus capable of improving efficiency of capturing carbon dioxide.

### SOLUTION TO PROBLEM

A carbon dioxide capturing apparatus of the present disclosure includes an adsorber, a jig, and a rail. The adsorber is disposed on the jig. The jig is rotatably disposed on the rail, and is moved downward together with the adsorber by the rail.

### ADVANTAGEOUS EFFECTS OF INVENTION

According to the carbon dioxide capturing apparatus of the present disclosure, efficiency of capturing carbon dioxide can be improved.

### BRIEF DESCRIPTION OF DRAWINGS

Fig. 1 is a front view of a carbon dioxide capturing apparatus 100A.
Fig. 2 is a side view of carbon dioxide capturing apparatus 100A.
Fig. 3 is a perspective view of an adsorber 30 included in carbon dioxide capturing apparatus 100A.
Fig. 4 is a cross-sectional view along a line IV-IV shown in Fig. 1.
Fig. 5 is a diagram as seen from a direction of an arrow V shown in Fig. 1.
Fig. 6 is a front view of a carbon dioxide capturing apparatus 100B.
Fig. 7 is a diagram as seen from a direction of an arrow VII shown in Fig. 6.
Fig. 8 is a front view of a carbon dioxide capturing apparatus 100C.
Fig. 9 is a diagram as seen from a direction of an arrow IX shown in Fig. 8.
Fig. 10 is a front view of a carbon dioxide capturing apparatus 100D.
Fig. 11 is a cross-sectional view along a line XI-XI shown in Fig. 10.
Fig. 12 is a diagram as seen from a direction of an arrow XII shown in Fig. 11.
Fig. 13 is an exploded perspective view of adsorber 30 included in a carbon dioxide capturing apparatus 100E.
Fig. 14 is a perspective view of adsorber 30 included in carbon dioxide capturing apparatus 100E.
Fig. 15 is a perspective view of adsorber 30 included in a carbon dioxide capturing apparatus 100F.
Fig. 16 is a front view of a carbon dioxide capturing apparatus 100G.
Fig. 17 is a diagram as seen from a direction of an arrow XVII shown in Fig. 16.
Fig. 18 is a front view of a carbon dioxide capturing apparatus 100H.

### DESCRIPTION OF EMBODIMENTS

Embodiments of the present disclosure will be described in detail with reference to the drawings. In the drawings below, the same or corresponding portions are denoted by the same reference characters and the same description will not be repeated. The embodiments described below may be applied in any appropriate combination.

### Embodiment 1.

A carbon dioxide capturing apparatus according to Embodiment 1 is described. The carbon dioxide capturing apparatus according to Embodiment 1 is referred to as a carbon dioxide capturing apparatus 100A.

### (Configuration of Carbon Dioxide Capturing Apparatus 100A)

A configuration of carbon dioxide capturing apparatus 100A is described below.

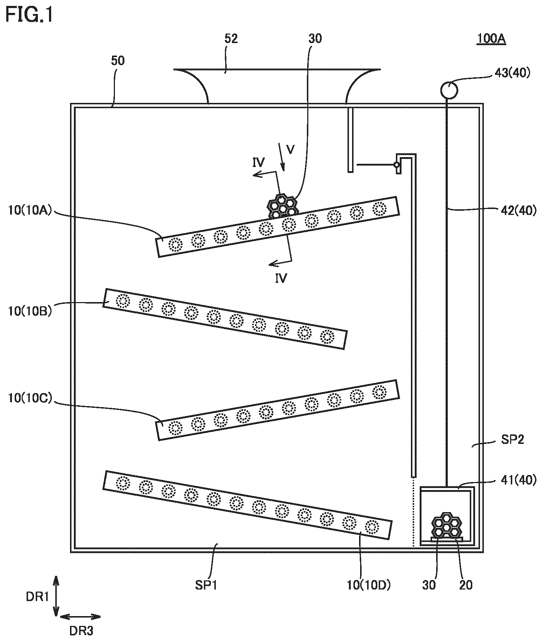

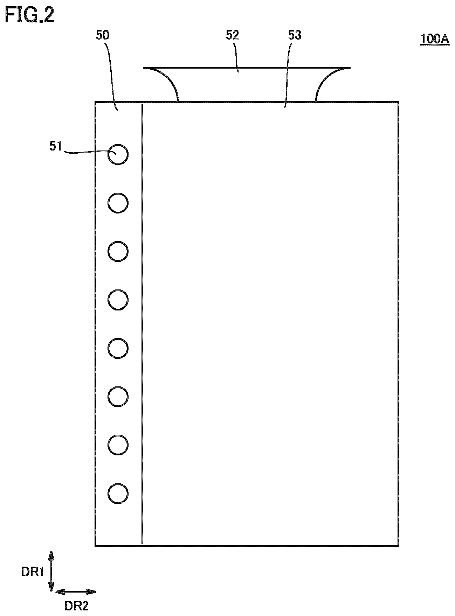

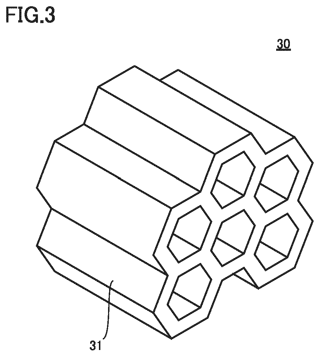

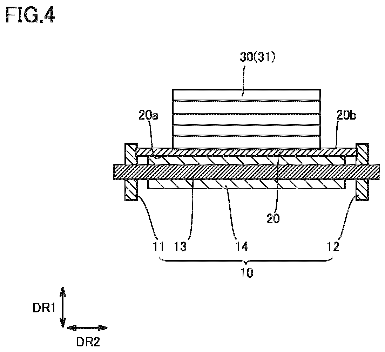

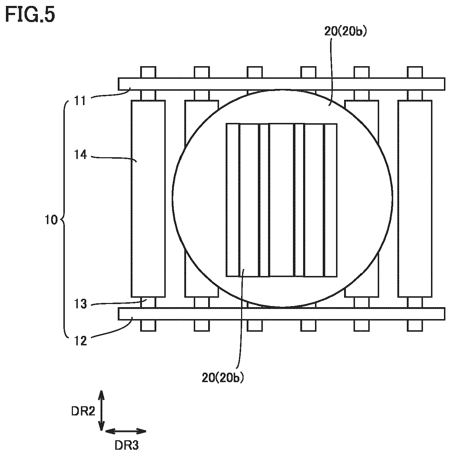

Fig. 1 is a front view of carbon dioxide capturing apparatus 100A. Fig. 2 is a side view of carbon dioxide capturing apparatus 100A. Fig. 3 is a perspective view of an adsorber 30 included in carbon dioxide capturing apparatus 100A. Fig. 4 is a cross-sectional view along a line IV-IV shown in Fig. 1. Fig. 5 is a diagram as seen from a direction of an arrow V shown in Fig. 1. As shown in Figs. 1 to 5, carbon dioxide capturing apparatus 100A includes a plurality of rails 10, a jig 20, and adsorber 30.

Each rail 10 includes a first side plate 11, a second side plate 12, a plurality of shafts 13, and a plurality of rollers 14.

First side plate 11 and second side plate 12 are disposed to face each other with a space therebetween in a second direction DR2 orthogonal to a first direction DR1. First direction DR1 is an upward and downward direction (vertical direction). Second direction DR2 is a direction orthogonal to first direction DR1. A third direction DR3 is a direction orthogonal to first direction DR1 and second direction DR2.

In the example shown in Fig. 1, the number of the plurality of rails 10 is four. Four rails 10 shown in Fig. 1 are referred to, from top to bottom, as a rail 10A, a rail 10B, a rail 10C, and a rail 10D. In each of rail 10A and rail 10C, first side plate 11 and second side plate 12 are inclined such that one end of the rail in third direction DR3 (the right end in Fig. 1) is located above the other end of the rail in third direction DR3 (the left end in Fig. 1). In each of rail 10B and rail 10D, first side plate 11 and second side plate 12 are inclined such that the other end of the rail in third direction DR3 is located above one end of the rail in third direction DR3.

The other end of rail 10B in third direction DR3 is located closer to the other side in third direction DR3 than the other end of rail 10A in third direction DR3 is. The one end of rail 10C in third direction DR3 is located closer to one side in third direction DR3 than the one end of rail 10B in third direction DR3 is. The other end of rail 10D in third direction DR3 is located closer to the other side in third direction DR3 than the other end of rail 10C in third direction DR3 is.

Each shaft 13 is rotatably supported at one end by first side plate 11, and is rotatably supported at the other end by second side plate 12. The plurality of shafts 13 are arranged in rows along a direction of extension of first side plate 11 (second side plate 12). Each roller 14 is disposed on an outer circumferential surface of each shaft 13. Roller 14 is rotated about a central axis of shaft 13.

Jig 20 has a plate-like shape. Jig 20 is disposed on rail 10. More specifically, jig 20 is disposed on the plurality of rollers 14 between first side plate 11 and second side plate 12. Jig 20 is rotatable on rail 10 (rollers 14).

Jig 20 has a first surface 20a and a second surface 20b. First surface 20a and second surface 20b are end surfaces of jig 20 in a thickness direction. First surface 20a is a surface that contacts rollers 14. Second surface 20b is a surface opposite to first surface 20a. An upper end of first side plate 11 and an upper end of second side plate 12 preferably protrude beyond second surface 20b. Jig 20 has a circular shape, for example, as seen from a direction orthogonal to second surface 20b. Note that the planar shape of jig 20 is not limited as such.

Adsorber 30 includes a skeleton 31 and an adsorbent 32 (not shown). Skeleton 31 has a honeycomb structure, for example. Adsorbent 32 is made of a material capable of adsorbing carbon dioxide. Adsorbent 32 supports, for example, amine, zeolite, silica gel, diatomaceous earth, alumina, activated carbon, and/or the like. Adsorbent 32 is attached to an inner wall surface and an outer wall surface of skeleton 31. Therefore, adsorber 30 can adsorb carbon dioxide contained in airflow regardless of the direction of the airflow toward adsorber 30. Adsorber 30 is disposed on jig 20. More specifically, adsorber 30 is disposed on second surface 20b.

Adsorber 30 is moved downward together with jig 20 by the plurality of rails 10. More specifically, jig 20 and adsorber 30 move on rail 10A from one end side to the other end side of rail 10A in third direction DR3 due to the action of gravity. Jig 20 and adsorber 30 that have reached the other end side of rail 10A in third direction DR3 fall onto rail 10B.

Similarly, jig 20 and adsorber 30 move on rail 10B from the other end side to one end side of rail 10B in third direction DR3, and fall onto rail 10C. As this is repeated, jig 20 and adsorber 30 are moved downward.

Carbon dioxide capturing apparatus 100A may further include a transfer unit 40. Jig 20 and adsorber 30 that have been moved downward by the plurality of rails 10 are moted upward by transfer unit 40. More specifically, jig 20 and adsorber 30 that have reached one end of lowermost rail 10 (rail 10D) in third direction DR3 are moved downward by transfer unit 40. Thus, jig 20 and adsorber 30 are returned onto uppermost rail 10 (rail 10A).

Transfer unit 40 includes, for example, a transfer chamber 41, a wire 42, and a drive unit 43. Jig 20 and adsorber 30 are housed in transfer chamber 41. Wire 42 has one end connected to transfer chamber 41 and the other end connected to drive unit 43. Drive unit 43 is a motor, for example. As drive unit 43 rolls up wire 42, transfer chamber 41 is moved upward, and jig 20 and adsorber 30 are also moved upward accordingly.

Carbon dioxide capturing apparatus 100A further includes a housing 50. An internal space of housing 50 includes a first space SP1 and a second space SP2. The plurality of rails 10 are disposed in first space SP1. Therefore, jig 20 and adsorber 30 are moved downward in first space SP1. More specifically, drive unit 43 rolls up wire 42 to move transfer chamber 41 upward in second space SP2. Transfer unit 40 moves jig 20 and adsorber 30 upward through second space SP2 in this manner.

Housing 50 is mounted, for example, on an outdoor unit 53 of an air conditioner. Housing 50 has an opening in each of a front surface (a surface of housing 50 located on the opposite side of outdoor unit 53 of the air conditioner) and a rear surface (a surface of housing 50 located on the outdoor unit 53 side of the air conditioner). A fan (not shown) is disposed in outdoor unit 53 of the air conditioner. Rotation of the fan causes airflow to pass along second direction DR2, for example, in first space SP1. That is, the airflow is introduced into housing 50 (first space SP1) through the opening in the front surface of housing 50, and is discharged through the opening in the rear surface of housing 50. The airflow that has passed through first space SP1 passes through outdoor unit 53 of the air conditioner and is then discharged out of outdoor unit 53 of the air conditioner through, for example, an exhaust port 52 included in outdoor unit 53 of the air conditioner. Note that the direction of passing of the airflow in first space SP1 is not limited as such. Housing 50 may be provided with a plurality of vent holes 51. Vent holes 51 extend through housing 50 to allow second space SP2 to communicate with an outside of housing 50. The airflow is also introduced into second space SP2 through vent holes 51. When vent holes 51 are formed, adsorber 30 is exposed to carbon dioxide while being transferred in second space SP2 as well. The airflow described above is a flow of gas containing carbon dioxide.

### (Effects of Carbon Dioxide Capturing Apparatus 100A)

Effects of carbon dioxide capturing apparatus 100A are described below.

There is airflow in first space SP1 as described above, and therefore, the airflow impinges on adsorber 30 while adsorber 30 is being moved downward by each rail 10, and adsorber 30 adsorbs carbon dioxide in the airflow. If the airflow impinges on adsorber 30 from only one direction, carbon dioxide is less likely to be adsorbed in a portion of adsorber 30 that is located downstream of the airflow, resulting in low efficiency of capturing carbon dioxide. In carbon dioxide capturing apparatus 100A, on the other hand, jig 20 is rotatably disposed on rail 10, and therefore, different portions of adsorber 30 face upstream of the airflow while adsorber 30 is being moved downward. According to carbon dioxide capturing apparatus 100A, therefore, the efficiency of capturing carbon dioxide is improved.

In carbon dioxide capturing apparatus 100A, the upper end of first side plate 11 and the upper end of second side plate 12 protrude beyond second surface 20b. Therefore, the movement of jig 20 in a direction orthogonal to the direction of movement of jig 20 is restricted by first side plate 11 and second side plate 12. That is, jig 20 is restrained from falling from rail 10. As a result, carbon dioxide capturing apparatus 100A does not require a mesh member to cover rail 10, and air resistance during passing of the airflow in first space SP1 can be reduced.

When carbon dioxide capturing apparatus 100A includes transfer unit 40, jig 20 and adsorber 30 that have been moved downward by each rail 10 are returned onto uppermost rail 10 again. When carbon dioxide capturing apparatus 100A includes transfer unit 40, therefore, adsorber 30 is repeatedly exposed to the airflow, and the efficiency of capturing carbon dioxide is further improved. When housing 50 is provided with vent holes 51, adsorber 30 is exposed to the airflow while being moved upward and returned onto uppermost rail 10 as well. When housing 50 is provided with vent holes 51, therefore, the efficiency of capturing carbon dioxide is further improved.

### Embodiment 2.

A carbon dioxide capturing apparatus according to Embodiment 2 is described. The carbon dioxide capturing apparatus according to Embodiment 2 is referred to as a carbon dioxide capturing apparatus 100B. Differences from carbon dioxide capturing apparatus 100A are mainly described, and the same description is not repeated herein.

### (Configuration of Carbon Dioxide Capturing Apparatus 100B)

A configuration of carbon dioxide capturing apparatus 100B is described below.

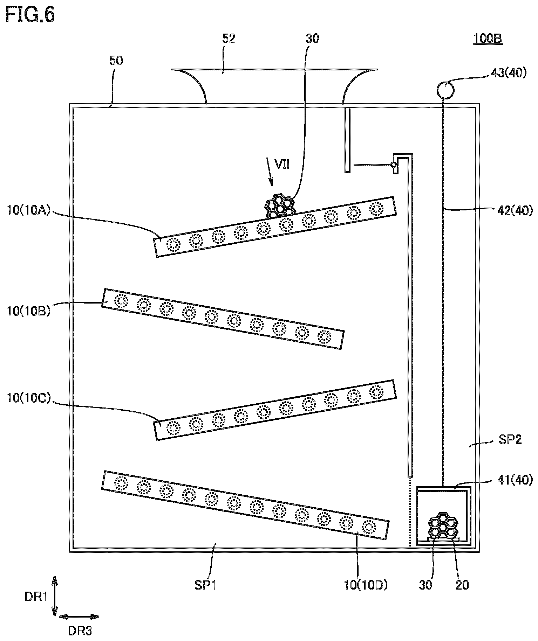

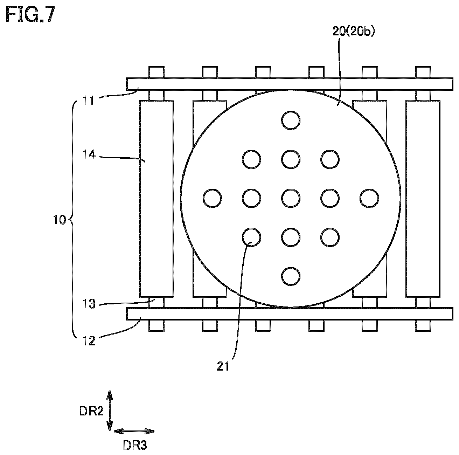

Fig. 6 is a front view of carbon dioxide capturing apparatus 100B. Fig. 7 is a diagram as seen from a direction of an arrow VII shown in Fig. 6. In Fig. 7, adsorber 30 is not shown. As shown in Figs. 6 and 7, carbon dioxide capturing apparatus 100B includes the plurality of rails 10, jig 20, adsorber 30, transfer unit 40, and housing 50. In this respect, the configuration of carbon dioxide capturing apparatus 100B is the same as the configuration of carbon dioxide capturing apparatus 100A.

In carbon dioxide capturing apparatus 100B, jig 20 is provided with a plurality of vent holes 21. Vent holes 21 extend through jig 20 along the thickness direction. In these respects, the configuration of carbon dioxide capturing apparatus 100B is different from the configuration of carbon dioxide capturing apparatus 100A.

### (Effects of Carbon Dioxide Capturing Apparatus 100B)

Effects of carbon dioxide capturing apparatus 100B are described below.

In carbon dioxide capturing apparatus 100B, vent holes 21 in jig 20 are formed, and therefore, airflow can pass through vent holes 21, which leads to reduced air resistance. In addition, carbon dioxide contained in the airflow that has passed through vent holes 21 is also adsorbed by adsorber 30, and therefore, the efficiency of capturing carbon dioxide is further improved.

### Embodiment 3.

A carbon dioxide capturing apparatus according to Embodiment 3 is described. The carbon dioxide capturing apparatus according to Embodiment 3 is referred to as a carbon dioxide capturing apparatus 100C. Differences from carbon dioxide capturing apparatus 100A are mainly described, and the same description is not repeated herein.

### (Configuration of Carbon Dioxide Capturing Apparatus 100C)

A configuration of carbon dioxide capturing apparatus 100C is described below.

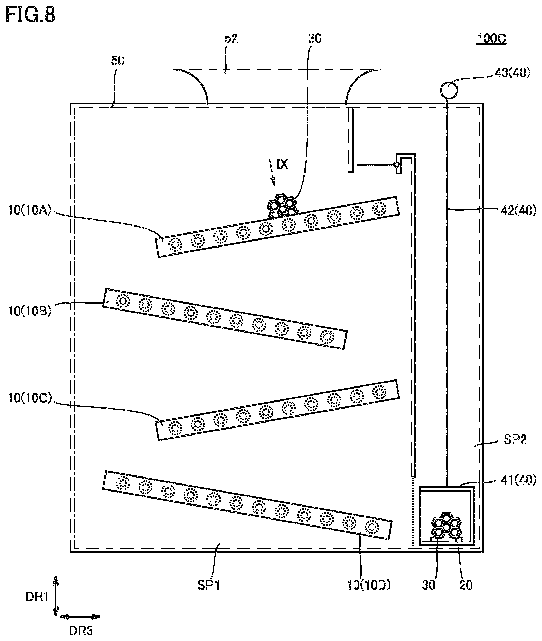

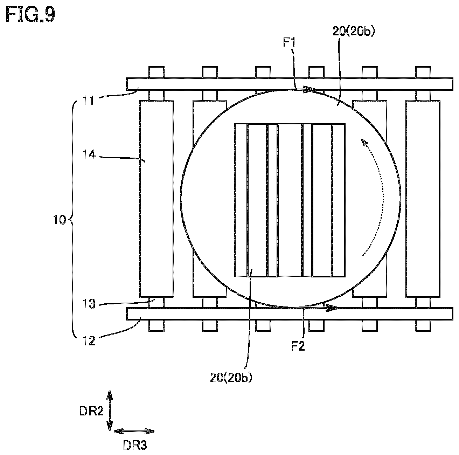

Fig. 8 is a front view of carbon dioxide capturing apparatus 100C. Fig. 9 is a diagram as seen from a direction of an arrow IX shown in Fig. 8. As shown in Figs. 8 and 9, carbon dioxide capturing apparatus 100C includes the plurality of rails 10, jig 20, adsorber 30, transfer unit 40, and housing 50. In this respect, the configuration of carbon dioxide capturing apparatus 100C is the same as the configuration of carbon dioxide capturing apparatus 100A.

In carbon dioxide capturing apparatus 100C, frictional resistance between first side plate 11 and jig 20 is different from frictional resistance between second side plate 12 and jig 20. In this respect, the configuration of carbon dioxide capturing apparatus 100C is different from the configuration of carbon dioxide capturing apparatus 100A.

First side plate 11 is made of, for example, a material different from that of second side plate 12. A surface of first side plate 11 that contacts jig 20 may have a surface roughness different from that of a surface of second side plate 12 that contacts jig 20. Surface treatment that increases or decreases the friction with jig 20 may be applied to either the surface of first side plate 11 that contacts jig 20 or the surface of second side plate 12 that contacts jig 20. That is, the configuration in which the frictional resistance between first side plate 11 and jig 20 is different from the frictional resistance between different second side plate 12 and jig 20 is not particularly limited.

### (Effects of Carbon Dioxide Capturing Apparatus 100C)

Effects of carbon dioxide capturing apparatus 100C are described below.

In carbon dioxide capturing apparatus 100C, the frictional resistance between first side plate 11 and jig 20 is different from the frictional resistance between second side plate 12 and jig 20. Therefore, an imbalance is created between a frictional force F1 acting between first side plate 11 and jig 20 (see Fig. 9) and a frictional force F2 acting between second side plate 12 and jig 20 (see Fig. 9).

This imbalance between the frictional forces facilitates rotation of jig 20 on rail 10 (see a dotted arrow in Fig. 9). As a result, in carbon dioxide capturing apparatus 100C, various portions of adsorber 30 are more likely to face upstream of the airflow passing through first space SP1, and the efficiency of capturing carbon dioxide is further improved.

### Embodiment 4.

A carbon dioxide capturing apparatus according to Embodiment 4 is described. The carbon dioxide capturing apparatus according to Embodiment 4 is referred to as a carbon dioxide capturing apparatus 100D. Differences from carbon dioxide capturing apparatus 100A are mainly described, and the same description is not repeated herein.

### (Configuration of Carbon Dioxide Capturing Apparatus 100D)

A configuration of carbon dioxide capturing apparatus 100D is described below.

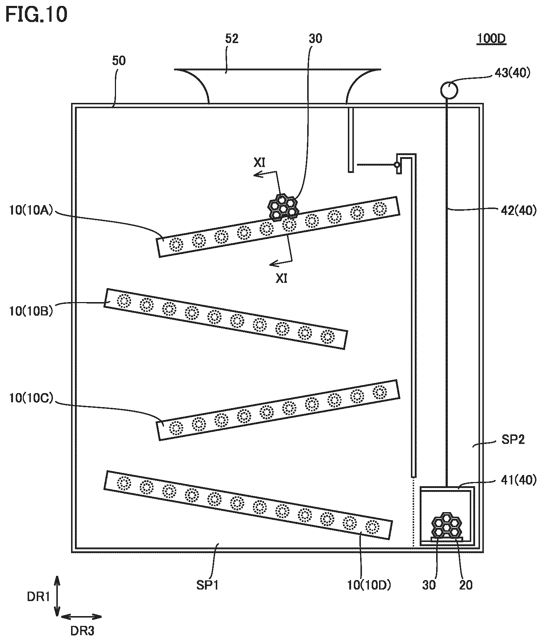

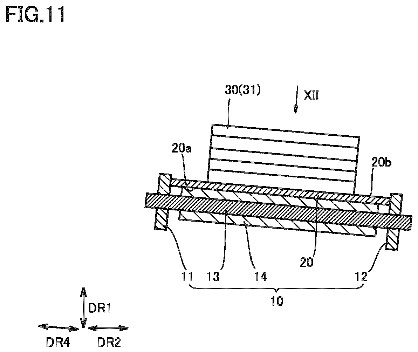

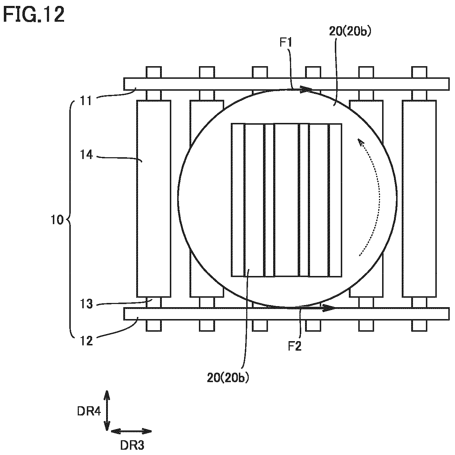

Fig. 10 is a front view of carbon dioxide capturing apparatus 100D. Fig. 11 is a cross-sectional view along a line XI-XI shown in Fig. 10. Fig. 12 is a diagram as seen from a direction of an arrow XII shown in Fig. 11. As shown in Figs. 10 to 12, carbon dioxide capturing apparatus 100D includes the plurality of rails 10, jig 20, adsorber 30, transfer unit 40, and housing 50. In this respect, the configuration of carbon dioxide capturing apparatus 100D is the same as the configuration of carbon dioxide capturing apparatus 100A.

In carbon dioxide capturing apparatus 100D, first side plate 11 and second side plate 12 face each other with a space therebetween in a fourth direction DR4. Fourth direction DR4 is orthogonal to third direction DR3, but is not orthogonal to first direction DR1 and second direction DR2 (is inclined with respect to first direction DR1 and second direction DR2). Stated from a different perspective, first side plate 11 faces second side plate 12 with a space therebetween, and is located above second side plate 12. In these respects, the configuration of carbon dioxide capturing apparatus 100D is different from the configuration of carbon dioxide capturing apparatus 100A.

### (Effects of Carbon Dioxide Capturing Apparatus 100D)

Effects of carbon dioxide capturing apparatus 100D are described below.

In carbon dioxide capturing apparatus 100D, first side plate 11 is located above second side plate 12, and therefore, frictional force F1 acting between first side plate 11 and jig 20 (see Fig. 12) is smaller than frictional force F2 acting between second side plate 12 and jig 20 (see Fig. 12) due to the action of gravity.

This imbalance between the frictional forces facilitates rotation of jig 20 on rail 10 (see a dotted arrow in Fig. 12). As a result, in carbon dioxide capturing apparatus 100D, various portions of adsorber 30 are more likely to face upstream of the airflow passing through first space SP1, and the efficiency of capturing carbon dioxide is further improved.

### Embodiment 5.

A carbon dioxide capturing apparatus according to Embodiment 5 is described. The carbon dioxide capturing apparatus according to Embodiment 5 is referred to as a carbon dioxide capturing apparatus 100E. Differences from carbon dioxide capturing apparatus 100A are mainly described, and the same description is not repeated herein.

### (Configuration of Carbon Dioxide Capturing Apparatus 100E)

A configuration of carbon dioxide capturing apparatus 100E is described below.

Carbon dioxide capturing apparatus 100E includes the plurality of rails 10, jig 20, adsorber 30, transfer unit 40, and housing 50. In this respect, the configuration of carbon dioxide capturing apparatus 100E is the same as the configuration of carbon dioxide capturing apparatus 100A.

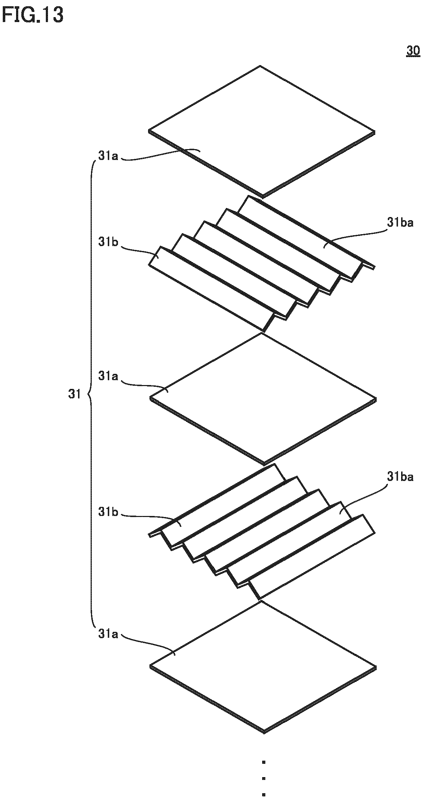

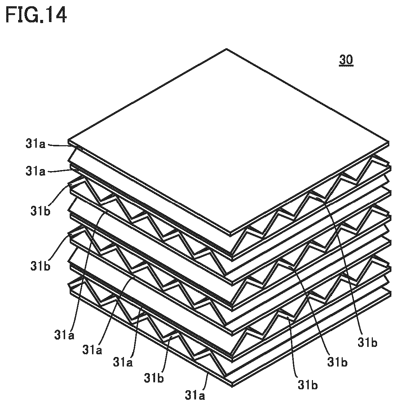

Fig. 13 is an exploded perspective view of adsorber 30 included in carbon dioxide capturing apparatus 100E. Fig. 14 is a perspective view of adsorber 30 included in carbon dioxide capturing apparatus 100E. As shown in Figs. 13 and 14, in carbon dioxide capturing apparatus 100E, skeleton 31 includes a plurality of flat plate members 31a and a plurality of corrugated plate members 31b. Flat plate members 31a and corrugated plate members 31b are alternately stacked. Stated from a different perspective, one corrugated plate member 31b is disposed between two adjacent flat plate members 31a, and one flat plate member 31a is disposed between two adjacent corrugated plate members 31b.

Each corrugated plate member 3 1b has a plurality of grooves 31ba. Grooves 31ba extend linearly. The plurality of grooves 31ba are arranged in a direction orthogonal to a direction of extension of grooves 31ba. A direction of extension of grooves 31ba in one of two adjacent corrugated plate members 31b is orthogonal to a direction of extension of grooves 31ba in the other of the two adjacent corrugated plate members 31b. Although not shown, adsorbent 32 is attached to a surface of skeleton 31.

### (Effects of Carbon Dioxide Capturing Apparatus 100E)

Effects of carbon dioxide capturing apparatus 100E are described below.

In carbon dioxide capturing apparatus 100E, skeleton 31 is formed by alternately stacking flat plate members 31a and corrugated plate members 31b, and therefore, airflow enters skeleton 31 regardless of the direction from which the airflow impinges on adsorber 30. According to carbon dioxide capturing apparatus 100E, therefore, the efficiency of capturing carbon dioxide is further improved.

### Embodiment 6.

A carbon dioxide capturing apparatus according to Embodiment 6 is described. The carbon dioxide capturing apparatus according to Embodiment 6 is referred to as a carbon dioxide capturing apparatus 100F. Differences from carbon dioxide capturing apparatus 100A are mainly described, and the same description is not repeated herein.

### (Configuration of Carbon Dioxide Capturing Apparatus 100F)

A configuration of carbon dioxide capturing apparatus 100F is described below.

Carbon dioxide capturing apparatus 100F includes the plurality of rails 10, jig 20, adsorber 30, transfer unit 40, and housing 50. In this respect, the configuration of carbon dioxide capturing apparatus 100F is the same as the configuration of carbon dioxide capturing apparatus 100A.

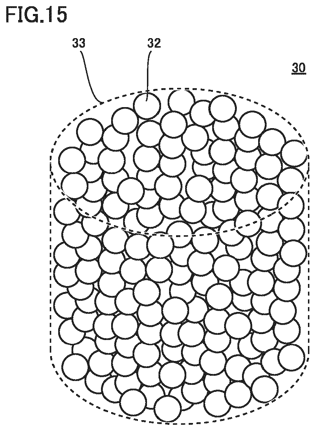

Fig. 15 is a perspective view of adsorber 30 included in carbon dioxide capturing apparatus 100F. As shown in Fig. 15, in carbon dioxide capturing apparatus 100F, adsorber 30 includes a plurality of adsorbents 32 and a container 33. In carbon dioxide capturing apparatus 100F, adsorbents 32 are in the form of beads. Container 33 is in the form of a mesh. Adsorbents 32 are housed in container 33. In these respects, the configuration of carbon dioxide capturing apparatus 100F is different from the configuration of carbon dioxide capturing apparatus 100A.

### (Effects of Carbon Dioxide Capturing Apparatus 100F)

Effects of carbon dioxide capturing apparatus 100F are described below.

In carbon dioxide capturing apparatus 100F, container 33 is in the form of a mesh, and therefore, airflow enters container 33 regardless of the direction from which the airflow impinges on adsorber 30, and carbon dioxide contained in the airflow is adsorbed by adsorbents 32 in the form of beads. According to carbon dioxide capturing apparatus 100F, therefore, the efficiency of capturing carbon dioxide is further improved.

### Embodiment 7.

A carbon dioxide capturing apparatus according to Embodiment 7 is described. The carbon dioxide capturing apparatus according to Embodiment 7 is referred to as a carbon dioxide capturing apparatus 100G. Differences from carbon dioxide capturing apparatus 100A are mainly described, and the same description is not repeated herein.

### (Configuration of Carbon Dioxide Capturing Apparatus 100G)

A configuration of carbon dioxide capturing apparatus 100G is described below.

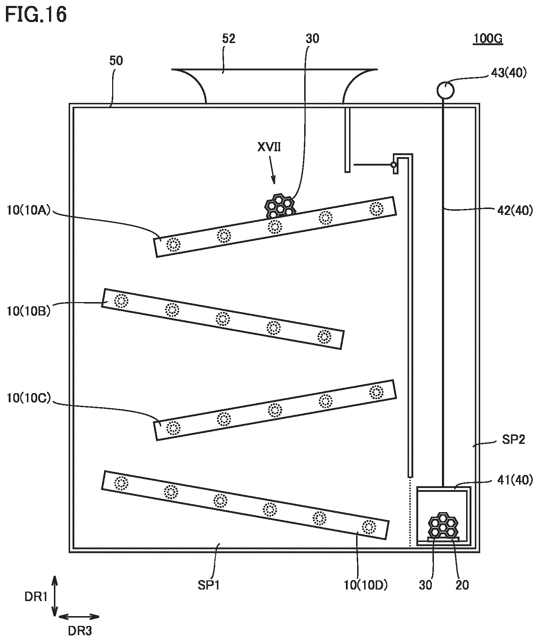

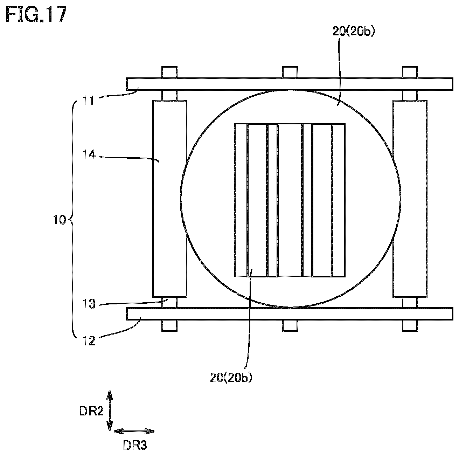

Fig. 16 is a front view of carbon dioxide capturing apparatus 100G. Fig. 17 is a diagram as seen from a direction of an arrow XVII shown in Fig. 16. As shown in Figs. 16 and 17, carbon dioxide capturing apparatus 100G includes the plurality of rails 10, jig 20, adsorber 30, transfer unit 40, and housing 50. In this respect, the configuration of carbon dioxide capturing apparatus 100G is the same as the configuration of carbon dioxide capturing apparatus 100A.

In carbon dioxide capturing apparatus 100G, rail 10 is configured to vibrate jig 20 and adsorber 30 while moving jig 20 and adsorber 30 downward. In this respect, the configuration of carbon dioxide capturing apparatus 100G is different from the configuration of carbon dioxide capturing apparatus 100A.

In carbon dioxide capturing apparatus 100G, the distance between two adjacent shafts 13 is longer than in carbon dioxide capturing apparatus 100A. Thus, in carbon dioxide capturing apparatus 100G, jig 20 and adsorber 30 are more likely to be vibrated when moving downward on rail 10. In carbon dioxide capturing apparatus 100G, some of the plurality of shafts 13 may be disposed to protrude beyond the rest of the plurality of shafts 13 arranged in rows. Thus, vibration is more likely to be applied to jig 20 and adsorber 30 when they pass on the some of the plurality of shafts located at the protruding position. In other words, in carbon dioxide capturing apparatus 100G, the configuration added to jig 20 and adsorber 30 on rail 10 is not particularly limited.

### (Effects of Carbon Dioxide Capturing Apparatus 100G)

Effects of carbon dioxide capturing apparatus 100G are described below.

In carbon dioxide capturing apparatus 100G, vibration is applied to jig 20 and adsorber 30 while jig 20 and adsorber 30 are being moved downward by each rail 10, and therefore, rotation of jig 20 and adsorber 30 on rail 10 is facilitated. According to carbon dioxide capturing apparatus 100G, therefore, the efficiency of capturing carbon dioxide is further improved.

### Embodiment 8.

A carbon dioxide capturing apparatus according to Embodiment 8 is described. The carbon dioxide capturing apparatus according to Embodiment 8 is referred to as a carbon dioxide capturing apparatus 100H. Differences from carbon dioxide capturing apparatus 100A are mainly described, and the same description is not repeated herein.

### (Configuration of Carbon Dioxide Capturing Apparatus 100H)

A configuration of carbon dioxide capturing apparatus 100H is described below.

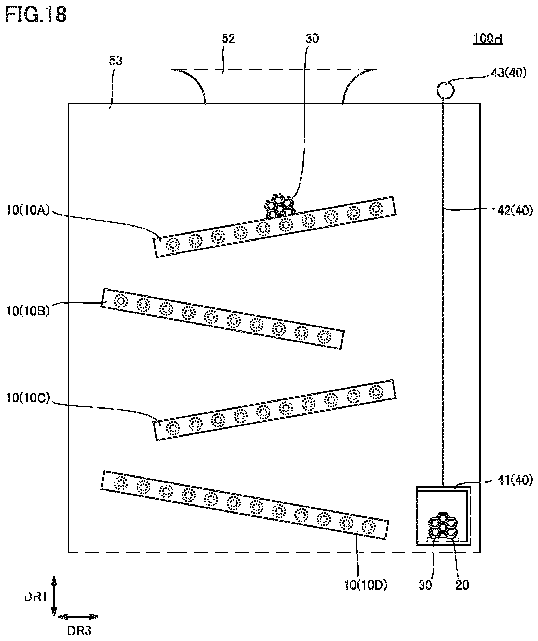

Fig. 18 is a front view of carbon dioxide capturing apparatus 100H. As shown in Fig. 18, carbon dioxide capturing apparatus 100H includes the plurality of rails 10, jig 20, and adsorber 30. Carbon dioxide capturing apparatus 100H may further include transfer unit 40. In this respect, the configuration of carbon dioxide capturing apparatus 100H is the same as the configuration of carbon dioxide capturing apparatus 100A. Carbon dioxide capturing apparatus 100H does not include housing 50. In this respect, the configuration of carbon dioxide capturing apparatus 100H is different from the configuration of carbon dioxide capturing apparatus 100A. In carbon dioxide capturing apparatus 100H, the plurality of rails 10 are mounted, for example, on outdoor unit 53 of the air conditioner.

### (Effects of Carbon Dioxide Capturing Apparatus 100H)

Effects of carbon dioxide capturing apparatus 100H are described below.

Carbon dioxide capturing apparatus 100H does not include housing 50, and therefore, airflow containing carbon dioxide comes into contact with adsorber 30 from all directions except for directions blocked by rails 10. According to carbon dioxide capturing apparatus 100H, therefore, the carbon dioxide can be efficiently captured.

It should be understood that the embodiments disclosed herein are illustrative and non-restrictive in every respect. The basic scope of the present disclosure is defined by the terms of the claims, rather than the embodiments described above, and is intended to include any modifications within the meaning and scope equivalent to the terms of the claims.

### REFERENCE SIGNS LIST

10, 10A, 10B, 10C, 10D rail; 11 first side plate; 12 second side plate; 13 shaft; 14 roller; 20 jig; 20a first surface; 20b second surface; 21 vent hole; 30 adsorber; 31 skeleton; 31a flat plate member; 31b corrugated plate member; 31ba groove; 32 adsorbent; 33 container; 40 transfer unit; 41 transfer chamber; 42 wire; 43 drive unit; 50 housing; 51 vent hole; 52 exhaust port; 53 outdoor unit of air conditioner; 100A carbon dioxide capturing apparatus; 100B, 100C, 100D, 100E, 100F, 100G, 100H carbon dioxide capturing apparatus; DR1 first direction; DR2 second direction; DR3 third direction; DR4 fourth direction; F1, F2 frictional force; SP1 first space; SP2 second space.

## Claims

1. A carbon dioxide capturing apparatus comprising:
an adsorber;
a jig; and
a rail, wherein
the adsorber is disposed on the jig, and
the jig is rotatably disposed on the rail, and is moved downward together with the adsorber by the rail.

2. The carbon dioxide capturing apparatus according to claim 1,
wherein
the jig is provided with a first vent hole extending through the jig.

3. The carbon dioxide capturing apparatus according to claim 1 or 2, further comprising:
a housing; and
a transfer unit, wherein
an internal space of the housing includes a first space and a second space,
the housing is provided with a second vent hole that allows the second space to communicate with an outside of the housing, and
after being moved downward in the first space by the rail, the jig and the adsorber are moved upward through the second space and returned onto the rail by the transfer unit.

4. The carbon dioxide capturing apparatus according to any one of claims 1 to 3, wherein
the rail includes a first side plate, a second side plate, a plurality of shafts, and a plurality of rollers,
the first side plate and the second side plate are disposed to face each other with a space therebetween in a direction intersecting an upward and downward direction,
each of the plurality of shafts is rotatably supported at one end by the first side plate, and is rotatably supported at the other end by the second side plate,
the plurality of shafts are arranged in rows along a direction of extension of the first side plate and the second side plate,
each of the plurality of rollers is disposed on an outer circumferential surface of each of the plurality of shafts, and
the jig is disposed on the plurality of rollers between the first side plate and the second side plate.

5. The carbon dioxide capturing apparatus according to claim 4,
wherein
the jig has a first surface facing the plurality of rollers, and a second surface which is opposite to the first surface and on which the adsorber is disposed, and
an upper end of the first side plate and an upper end of the second side plate are located at a position protruding beyond the second surface.

6. The carbon dioxide capturing apparatus according to claim 5,
wherein
the jig has a circular shape as seen from a direction orthogonal to the second surface, and
frictional resistance between the first side plate and the jig is different from frictional resistance between the second side plate and the jig.

7. The carbon dioxide capturing apparatus according to claim 5 or 6,
wherein
the first side plate and the second side plate are disposed to face each other with a space therebetween in a direction inclined with respect to an upward and downward direction.

8. The carbon dioxide capturing apparatus according to any one of claims 1 to 7, wherein
the adsorber includes a skeleton formed of a plurality of flat plate members and a plurality of corrugated plate members,
each of the plurality of corrugated plate members has a plurality of linearly extending grooves,
one of the plurality of corrugated plate members is disposed between two adjacent ones of the plurality of flat plate members, and
a direction of extension of the plurality grooves in one of two adjacent ones of the plurality of corrugated plate members is orthogonal to a direction of extension of the plurality grooves in the other of the two adjacent ones of the plurality of corrugated plate members.

9. The carbon dioxide capturing apparatus according to any one of claims 1 to 7, wherein
the adsorber includes an adsorption container, and a plurality of beads which are disposed in the adsorption container and which are capable of adsorbing carbon dioxide, and
the adsorption container is in the form of a mesh.

10. The carbon dioxide capturing apparatus according to any one of claims 1 to 9, wherein
the rail is configured to move the jig and the adsorber downward while vibrating the jig and the adsorber.
